# EUROPEAN PATENT SPECIFICATION

(11) **EP 3 290 637 B1**
(45) Date of publication and mention of the grant of the patent: **03.08.2022**
(21) Application number: 17188878.7
(22) Date of filing: 31.08.2017
(51) Int. Cl.: F01D 5/14, F04D 29/32, F01D 5/08

(54) **TANDEM ROTOR BLADES WITH COOLING FEATURES**
TANDEMROTORSCHAUFELN MIT KÜHLEINRICHTUNGEN
PALES DE ROTOR EN TANDEM AVEC ÉLÉMENTS DE REFROIDISSEMENT

(30) Priority: 31.08.2016 US 201615252331
(43) Date of publication of application: 07.03.2018
(73) Proprietor: Raytheon Technologies Corporation, Farmington, CT 06032 (US)
(72) Inventor: SCHWARZ, Frederick M., Glastonbury, CT 06033 (US); FORCIER, Matthew P., South Windsor, CT 06074 (US); SCHULER, Brian J., West Hartford, CT 06107 (US)
(74) Representative: Dehns

(56) References cited:
- EP-A1- 3 009 598
- US-A- 3 937 592
- US-A1- 2013 209 224
- US-A1- 2013 219 919
- US-A1- 2015 240 836
- US-A1- 2015 308 341

## Description

### BACKGROUND OF THE INVENTION

This application relates to tandem compressor rotor blades of gas turbine engines having improved cooling structure.

Gas turbine engines are known, and typically include a fan delivering air into a bypass duct as propulsion air. The fan also delivers air into a compressor section in a core engine. The compressed air is delivered into a combustor where it is mixed with fuel and ignited. Products of this combustion pass downstream over turbine rotors, driving them to rotate.

As can be appreciated, the components in the turbine section and downstream portions of the compressor section experience very high temperatures. As such, a good deal of design is put into cooling those areas.

Historically, the fan in the gas turbine engine rotated at the same speed as a fan drive turbine. However, more recently, a gear reduction has been placed between the two such that the fan can rotate at a slower speed

With this, design opportunities have been given to the designer of a gas turbine engine. One such opportunity is to increase the overall pressure ratio delivered by the compressor section. However, this, in turn, increases temperature and, in particular, the temperature at a downstream end of the compressor section.

EP 3 009 598 A1 discloses a gas turbine engine in accordance with the preamble of claim 1.

US 3 937 592 A discloses a multi-stage axial flow compressor, US 2015/240836 A1 discloses a group of blade rows, US 2013/209224 A1 discloses a turbomachine, and US 2015/0308341 A1 discloses a compressor injector apparatus system

### SUMMARY OF THE INVENTION

The present invention provides a gas turbine engine according to claim 1.

In an embodiment, there is no intervening stator vane stage between the forward blades and the aft blades.

In another embodiment according to any of the previous embodiments, at least 10% of the cooling air passing through the TOBI is compressor midstream air.

In another embodiment according to the previous embodiment, the compressor midstream air is cooled in a heat exchanger before passing into the TOBI.

In another embodiment according to any of the previous embodiments, the seal is provided on both the downstream end of the downstream most blade stage, and the upstream end of the downstream vane row.

In another embodiment according to any of the previous embodiments, a static structure radially inward of the downstream vane row includes a plate extending at an angle which is non-perpendicular relative to a center axis of the engine and having a component extending radially inwardly and the disk hub also having a portion extending in a direction which is non-perpendicular to the central axis and having a component which is radially inwardly, the plate causing the air having passed through the TOBI to be confined adjacent to the disk hub portion.

In another embodiment according to the previous embodiment, the plate and the disk hub portion each having a radially inner portion which extends closer to being parallel to the central axis than does a radially outer portion.

In another embodiment according to the previous embodiment, a mini disk is positioned radially inwardly of the radially inner portion of the hub.

In another embodiment according to any of the previous embodiments, the downstream most blade stage has air passages between the blades and the rotor disk such that air from the cavity can pass upstream toward a vane row upstream of the downstream most blade stage.

These and other features may be best understood from the following drawings and specification.

### BRIEF DESCRIPTION OF THE DRAWINGS

Figure 1 is a schematic cross-sectional side elevation view of an illustrative embodiment of a gas turbine engine constructed in accordance with the present invention, showing a location of a tandem blade stage;
Figure 2 is an enlarged schematic side elevation view of a portion of the gas turbine engine of Figure 1, according to the present invention, , showing the last stages of the HPC with the tandem blade stage forward of an exit guide vane stage;
Figure 3 is a top perspective view of an embodiment of a tandem blade constructed in accordance with the present invention, showing a forward blade and an aft blade; and
Figure 4 is a schematic side elevation view of a portion of another embodiment of a gas turbine engine, showing the last stages of the HPC with the tandem blade stage forward of a tandem stator vane stage, where the blades of the tandem blade stage do not overlap one another.

### DETAILED DESCRIPTION

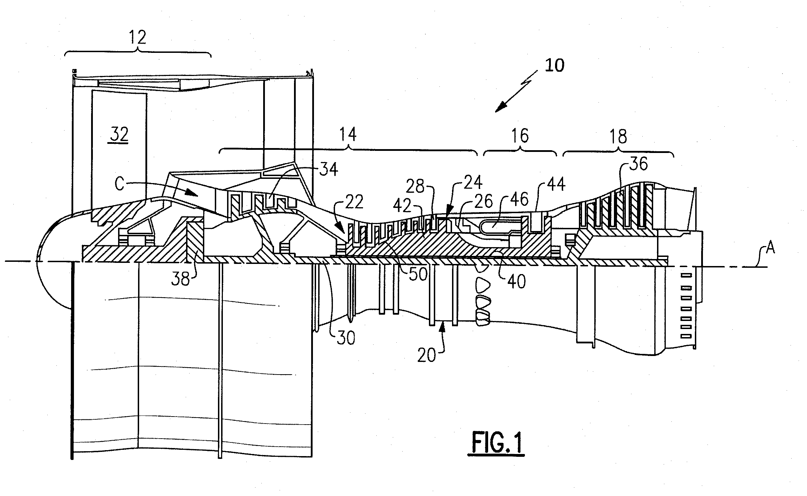

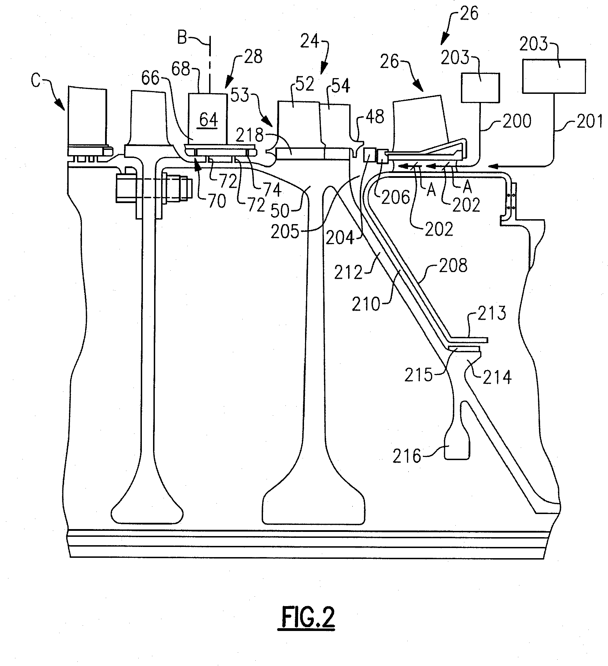

Reference will now be made to the drawings wherein like reference numerals identify similar structural features or aspects of the subject disclosure. For purposes of explanation and illustration, and not limitation, a cross-sectional view of an illustrated embodiment of the gas turbine engine 100 constructed in accordance with the disclosure is shown in Figure 1 and is designated generally by reference character 10. Other embodiments of gas turbine engines constructed in accordance with the disclosure, or aspects thereof, are provided in Figs. 2-4, as will be described.

As shown in Figure 1, a gas turbine engine 10 defines a centerline axis A and includes a fan section 12, a compressor section 14, a combustor section 16 and a turbine section 18. Gas turbine engine 10 also includes a case 20. Compressor section 14 drives air along a gas path C for compression and communication into the combustor section 16 then expansion through the turbine section 18. Although depicted as a two-spool turbofan gas turbine engine in the disclosed configuration, it should be understood that the concepts described herein are not limited to use with two-spool turbofans as the teachings may be applied to other types of turbine engines including three-spool architectures.

Gas turbine engine 10 also includes an inner shaft 30 that interconnects a fan 32, a LPC 34 and a low pressure turbine 36. Inner shaft 30 is connected to fan 32 through a speed change mechanism, which in exemplary gas turbine engine 10 is illustrated as a geared architecture 38. An outer shaft 40 interconnects a HPC 42 and high pressure turbine 44. A combustor 46 is arranged between HPC 42 and high pressure turbine 44. The core airflow is compressed by LPC 34 then HPC 42, mixed and burned with fuel in combustor 46, then expanded over the high pressure turbine 44 and low pressure turbine 36.

With continued reference to Figure 1, HPC 42 is aft of LPC 34. Gas path C is defined in HPC 42 between the compressor case, e.g. engine case 20, and a rotor disk 50. A plurality of stages 22 are defined in gas path C. Plurality of stages 22 includes at least one tandem blade stage 24. Gas turbine engine 10 includes an exit guide vane stage 26 aft of tandem blade stage 24. Exit guide vane stage 26 defines the end of compressor section 14. At least one forward stator vane stage 28 is disposed forward of tandem blade stage 24. Forward stator vane stage 28 and tandem blade stage 24 define the last two sequential stages before exit guide vane stage 26. While embodiments of the tandem blade stage are described herein with respect to a gas turbine engine, those skilled in the art will readily appreciate that embodiments of the tandem blade stage can be used in a variety of turbomachines and in a variety of locations throughout a turbomachine, for example the tandem blade stage can be used in the fan, LPC, low pressure turbine and high pressure turbine.

Tandem blade stage 24 combines two, typically discrete, blade stages into a single stage. For example, a traditional compressor configuration generally has the last stages in the pattern of stator stage, rotor stage, stator stage, rotor stage, and exit guide vane stage. Embodiments described herein have the pattern of stator stage 28, tandem rotor stage 24, and exit guide vane stage 26 or a tandem stator stage, described below. Tandem rotor stage 24 does more work than a traditional single blade stage, providing additional pressure-ratio and also reducing the need for a traditional stator vane stage that typically separates two traditional single blade stages. By removing one of the stator vane stages, respective shrouded cavities that are typically associated with each vane in the stator vane stage, are no longer needed. Shrouded cavities tend to increase metal temperatures because of the interface between a seal, typically a knife edge seal, and the rotor disk. The increased temperatures at the knife edge seal cause increased overall temperatures as part of windage heat-up. By removing one of the shrouded cavities, the windage heat-up is reduced and temperatures of other engine components in the last stages of the HPC are also reduced.

Those skilled in the art will readily appreciate that by reducing the temperatures, the component life can be improved. For example, by removing the intervening stator vane stage and its knife edge seal, the remaining knife edge seals can be approximately ten to fifteen percent of compressor discharge temperature cooler than they would be if the traditional intervening stator stage and knife edge seal was included. Not only does this potentially increase the life of the remaining seals, it also increases the life of the surrounding engine components due to the reduced windage heat-up temperature. On the other hand, the overall operating temperatures can be increased in order to increase the pressure ratio while still remaining within the traditional temperature tolerances of the engine components. Reducing the need for a traditional stator vane stage by using a tandem blade stage also reduces the length of the compressor since gaps between stages can be removed, and/or tandem rotor blades can overlap each other in the axial direction.

As shown in Figure 2, tandem blade stage 24 includes a plurality of circumferentially disposed blade platforms 48, each having a blade pair 53. Each blade platform 48 is operatively connected to rotor disk 50 disposed radially inward from blade platforms 48. Blade pair 53 extends radially from each of blade platforms 48 and includes a forward blade 52 and an aft blade 54. Those skilled in the art will readily appreciate that each blade pair 53 can be integrally formed with a respective one of blade platforms 48. While tandem blade stage 24 is described herein as having a plurality of blade platforms 48, each with a respective blade pair 53, those skilled in the art will readily appreciate that blade platforms 48 can include multiple blade pairs 53 on a single platform and/or a first blade platform can have forward blade 52 and a second blade platform directly aft of the first blade platform can have aft blade 54, similar to a blade pair 124 described below. Forward stator vane stage 28 includes a plurality of circumferentially disposed stator vanes 64. Each stator vane 64 extends from a vane root 66 to a blade tip 68 along a respective vane axis B and can be operatively connected to a shrouded cavity 70 disposed radially between vane root 66 and rotor disk 50. Knife edge seals 72 are between rotor disk 50 and an inner diameter surface, or platform 74 of shrouded cavity 70.

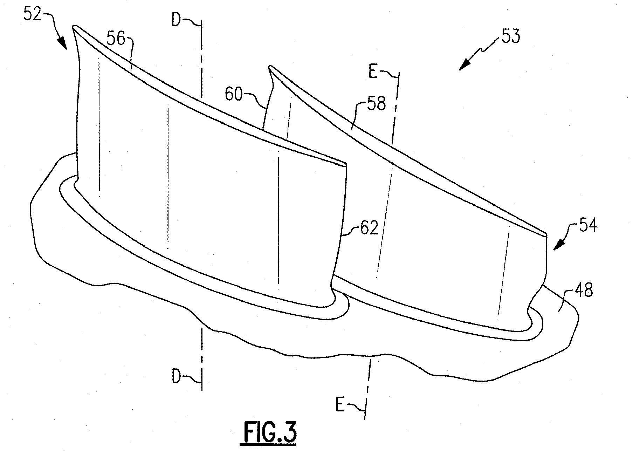

As shown in Figure 3, forward blade 52 extends radially from blade platform 48 to an opposed forward blade tip 56 along a forward blade axis D. Aft blade 54 extends radially from blade platform 48 to an opposed aft blade tip 58 along an aft blade axis E. Aft blade 54 further directs air flow without an intervening stator vane stage shrouded cavity, e.g. a shrouded cavity similar to shrouded cavity 70. A leading edge 60 of aft blade 54 is defined forward of a trailing edge 62 of forward blade 52 with respect to centerline axis A, shown in Figure 1. Those skilled in the art will readily appreciate that forward blade 52 and aft blade 54 do not need to overlap one another, for example, it is contemplated that leading edge 60 of aft blade 54 can be defined aft of trailing edge 62 of forward blade 52, similar to tandem blade stage 124, described below.

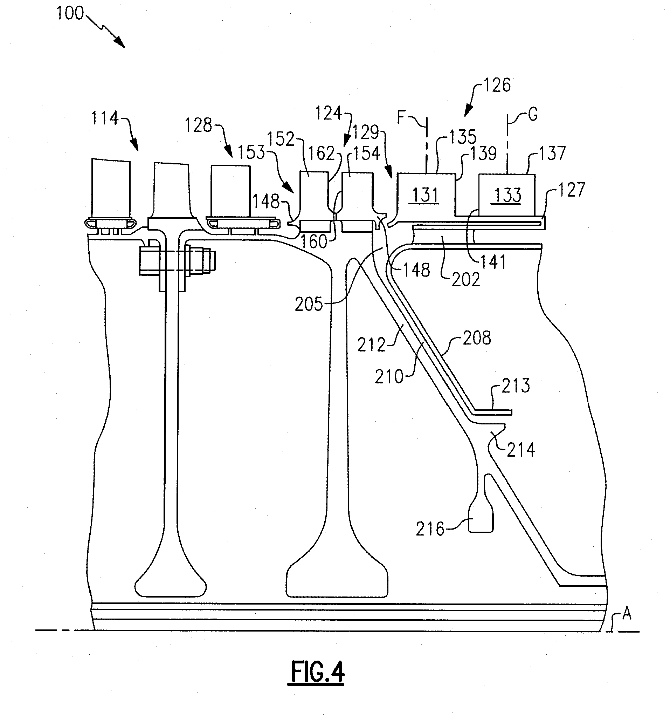

Now with reference to Figure 4, another embodiment of a gas turbine engine 100 is shown. Gas turbine engine 100 differs from gas turbine engine 10 in that gas turbine engine 100 has a tandem stator vane stage 126 aft of tandem blade stage 124, instead of having an exit guide vane stage, e.g. exit guide vane stage 26. Tandem stator vane stage 126 includes a vane platform 127 radially inward of a compressor case, e.g. compressor case 20, shown in Figure 1. A stator vane pair 129 extends radially from vane platform 127. Stator vane pair 129 includes a forward stator vane 131 and an aft stator vane 133. Forward stator vane 131 extends radially from the vane platform to an opposed forward stator vane tip 135 along a forward stator vane axis F. Aft stator vane 133 extends radially from vane platform 127 to an opposed aft stator vane tip 137 along an aft stator vane axis G. A leading edge 141 of aft stator vane 133 does not axially overlap a trailing edge 139 of forward stator vane 131. However, those skilled in the art will readily appreciate that leading edge 141 of aft stator vane 133 can be defined forward of trailing edge 139 of forward stator vane 131, similar to tandem blade stage 24, described above. Tandem stator vane stage 126 defines the end of compressor section 114 and tandem blade stage 124 and the tandem stator vane stage 126 define the last two sequential stages in compressor section 114.

With continued reference to Figure 4, gas turbine engine 100 also differs from gas turbine engine 10 in that a trailing edge 162 of forward blade 152 does not overlap a leading edge 160 of aft blade 154. Further, instead of a single blade platform, e.g. blade platform 48, each respective blade pair 124 includes a respective blade platform 148 for each of blades 152 and 154. Those skilled in the art will readily appreciate that a similar platform configuration can be utilized for tandem stator stage 126. It is also contemplated that that leading edge 160 of aft blade 154 can be defined forward of trailing edge 162 of forward blade 152, similar to tandem blade stage 24, described above.

The methods and systems of the present disclosure, as described above and shown in the drawings, provide for gas turbine engines with superior properties including improved control over fluid flow properties through the engine and reduced windage heat up.

As mentioned above, designers would like to increase the temperature at this last compressor rotor stage 24. However, with this is a corresponding rise in the stress level and, in particular, the stress levels seen by a disk 50 of the compressor rotor. During high power operation, such as takeoff, the outer portions of the compressor rotor, such as the blades, will increase in temperature more rapidly than will the disk 50. This results in very high stresses, which require the compressor rotor to be able to withstand such stresses. Designers would like to further increase these temperatures.

Generally, two avenues exist for allowing the increase in these temperatures. One would be to increase the material properties of the compressor rotor and, in particular, the disk. The other is to improve cooling. As mentioned above, the disclosed arrangement reduces the cooling load. This application introduces additional cooling features which allow the designer to reach even higher temperatures at blade stage 24.

Returning to Figure 2, a tangential onboard injector (TOBI) 202 is positioned radially inwardly of the vane stage 26. As shown schematically, the injector 202 has vanes which extend at an angle which is non-parallel to a center axis A of the engine. In a TOBI, small vanes spray onto an outer portion of a rotating disk rim. Thus, air is sprayed on a tangent to the disk 50 of stage 24.

The air may be taken from a compressor midstream source 200 or from a high pressure source 201, such as air compressed by stage 26. Both airflows may be cooled in a heat exchanger 203. In one embodiment, at least 10% of the cooling air passing through the TOBI is compressor midstream air. The air downstream of the TOBI reaches a chamber 205 and is directed to cool rotor disk 50. Seals 204 and 206, such as honeycomb seals, seal between the blade stage 24 and the vane stage 26 to direct the air from the TOBI 202 radially inwardly into a channel 210 formed between a plate 208 and a disk portion 212. In other embodiments, a knife edged seal may be provided on one of the blade stage 24 and vane stage 26 with a honeycomb abradable seal on the other. Alternatively, a brush seal could be provided on vane stage 26 sealing against a cylindrical surface on the blade stage 24. Any number of other seal embodiments could be utilized within the scope of this disclosure.

As illustrated, the plate 208 may have an axially extending inner portion 213, which extends along an axially extending inner end 214 of the disk portion 212. An intermediate seal 215 may be utilized at this location to control the airflow. The plate 208 and axially extending inner portion 213 ensure that the air from the TOBI tends to adhere to the rotor disk 50 and, in particular, inner end portions 213 and 214 are providing cooling air.

The plate 208 may be called a static structure radially inward of last vane stage 26 and includes a plate 208 extending at an angle which is non-perpendicular relative to a center axis of said engine and having a component extending radially inwardly. The disk hub also has a portion 212 extending in a direction which is non-perpendicular to the central axis and having a component which is radially inwardly. Plate 208 causes the air having passed through said TOBIs to be confined to a channel 210 adjacent to hub portion 212.

The plate and the hub have a radially inner portion 213/214 which extend closer to being parallel to the central axis than radially outer portions.

In addition, a mini disk 216 may be provided to support a middle section of the hub of the disk 50. The mini disk 216 assists in the "fight" between the outer area 50 of the disk and the radially inner areas, which will tend to heat up less rapidly than the outer areas 50. Air passages 218 are formed between blades 52 and 54 and disk 50 to provide cooling air such as to the seals 72 and platform 74.

Similar structure is shown in the Figure 4 embodiment.

Although embodiments of this invention have been disclosed, a worker of ordinary skill in this art would recognize that certain modifications would come within the scope of this disclosure. For that reason, the following claims should be studied to determine the true scope and content of this invention.

## Claims

1. A gas turbine engine (10;100) comprising:
a compressor section (14) having a downstream most blade stage (24;124) and a downstream vane row (26;126) positioned downstream of said downstream most blade stage (24;124), said downstream most blade stage (24;124) including a plurality of blade pairs (53;153) with the majority of blade pairs (53;153) being circumferentially spaced apart from others of said blade pairs (53;153), each said blade pair (53;153) being operatively connected to a rotor disk (50) disposed radially inward from said blade pairs (53;153) with each said blade pair (53;153) including a forward blade (52;152) and an aft blade (54;154), said aft blades (54;154) being configured to further condition airflow with respect to said forward blade (52;152);
**characterised in that**
tangential onboard injector (TOBI) (202) is positioned radially inwardly of said downstream vane row (26; 126); and
a seal (204,206) is provided between a downstream end of said downstream most blade stage (24;124) and an upstream end of said downstream vane row (26;126), said seal (206,204) defining a cavity (205) extending radially inwardly along a hub of said disk (50), wherein air passing through said TOBI (202) is air having been compressed by said downstream most blade stage (24;124) of said compressor section (14), and said air passes through a heat exchanger (203) before passing through said TOBI (202).

2. The gas turbine engine (10;100) as set forth in claim 1, wherein there is no intervening stator vane stage between said forward blades (52;152) and said aft blades (54; 154).

3. The gas turbine engine (10;100) as set forth in claim 1 or 2, wherein at least 10% of the cooling air passing through said TOBI (202) is compressor midstream air (200).

4. The gas turbine engine (10;100) as set forth in claim 3, wherein said compressor midstream air (200) is cooled in the heat exchanger (203) before passing into said TOBI (202).

5. The gas turbine engine (10;100) as set forth in any preceding claim, wherein said seal (206,204) is provided on both said downstream end of said downstream most blade stage (24;124), and said upstream end of said downstream vane row (26; 126).

6. The gas turbine engine (10;100) as set forth in any preceding claim, wherein a static structure radially inward of said downstream vane row (26;126) includes a plate (208) extending at an angle which is non-perpendicular relative to a center axis (A) of said engine (10;100) and having a component extending radially inwardly and said disk hub also having a portion (212) extending in a direction which is non-perpendicular to said central axis and having a component which is radially inwardly, said plate (208) causing the air having passed through said TOBI (202) to be confined adjacent to said disk hub portion (212).

7. The gas turbine engine (10;100) as set forth in claim 6, wherein said plate (208) and said disk hub portion (212) each have a radially inner portion (213,214) which extends closer to being parallel to said central axis than does a radially outer portion.

8. The gas turbine engine (10;100) as set forth in claim 7, wherein a mini disk (216) is positioned radially inwardly of said radially inner portion (213,214) of said hub.

9. The gas turbine engine (10;100) as set forth in any preceding claim, wherein said downstream most blade stage (24;124) has air passages (218) between said blades (53; 153) and said rotor disk (50) such that air from said cavity (205) can pass upstream toward a vane row (64) upstream of said downstream most blade stage (24; 124).

## Patentansprüche

1. Gasturbinentriebwerk (10; 100), umfassend:
einen Verdichterabschnitt (14), der eine am weitesten stromabwärtige Schaufelstufe (24; 124) und eine stromabwärtige Leitschaufelreihe (26; 126) aufweist, die stromabwärts der am weitesten stromabwärtigen Schaufelstufe (24; 124) positioniert ist, wobei die am weitesten stromabwärtige Schaufelstufe (24; 124) eine Vielzahl von Schaufelpaaren (53; 153) beinhaltet, wobei die Mehrheit der Schaufelpaare (53; 153) umlaufend von anderen der Schaufelpaare (53; 153) beabstandet ist, wobei jedes Schaufelpaar (53; 153) mit einer Rotorscheibe (50) wirkverbunden ist, die radial einwärts von den Schaufelpaaren (53; 153) angeordnet ist, wobei jedes Schaufelpaar (53; 153) eine vordere Schaufel (52; 152) und eine hintere Schaufel (54; 154) beinhaltet, wobei die hinteren Schaufeln (54; 154) konfiguriert sind, um Luftstrom in Bezug auf die vordere Schaufel (52; 152) weiter zu konditionieren;
**dadurch gekennzeichnet, dass**
eine bordseitige Tangentialeinspritzvorrichtung (tangential onboard injector - TOBI) (202) radial einwärts der stromabwärtigen Leitschaufelreihe (26; 126) positioniert ist; und
eine Dichtung (204, 206) zwischen einem stromabwärtigen Ende der am weitesten stromabwärtigen Schaufelstufe (24; 124) und einem stromaufwärtigen Ende der stromabwärtigen Leitschaufelreihe (26; 126) bereitgestellt ist, wobei die Dichtung (206, 204) einen Hohlraum (205) definiert, der sich radial einwärts entlang einer Nabe der Scheibe (50) erstreckt, wobei Luft, die durch die TOBI (202) strömt, Luft ist, die durch die am weitesten stromabwärtige Schaufelstufe (24; 124) des Verdichterabschnittes (14) verdichtet worden ist, und die Luft durch einen Wärmetauscher (203) strömt, bevor sie durch die TOBI (202) strömt.

2. Gasturbinentriebwerk (10; 100) nach Anspruch 1, wobei es keine dazwischenliegende Statorleitschaufelstufe zwischen den vorderen Schaufeln (52; 152) und den hinteren Schaufeln (54; 154) gibt.

3. Gasturbinentriebwerk (10; 100) nach Anspruch 1 oder 2, wobei zumindest 10 % der Kühlluft, die durch die TOBI (202) strömt, Verdichtermittelstromluft (200) ist.

4. Gasturbinentriebwerk (10; 100) nach Anspruch 3, wobei die Verdichtermittelstromluft (200) in dem Wärmetauscher (203) gekühlt wird, bevor sie in die TOBI (202) strömt.

5. Gasturbinentriebwerk (10; 100) nach einem vorhergehenden Anspruch, wobei die Dichtung (206, 204) sowohl an dem stromabwärtigen Ende der am weitesten stromabwärtigen Schaufelstufe (24; 124) als auch an dem stromaufwärtigen Ende der stromabwärtigen Leitschaufelreihe (26; 126) bereitgestellt ist.

6. Gasturbinentriebwerk (10; 100) nach einem vorhergehenden Anspruch, wobei eine statische Struktur radial einwärts der stromabwärtigen Leitschaufelreihe (26; 126) eine Platte (208) beinhaltet, die sich in einem Winkel erstreckt, der nicht senkrecht relativ zu einer Mittelachse (A) des Triebwerks (10; 100) ist und eine Komponente aufweist, die sich radial einwärts erstreckt, und wobei die Scheibennabe auch einen Abschnitt (212) aufweist, der sich in einer Richtung erstreckt, die nicht senkrecht zu der Mittelachse ist und eine Komponente aufweist, die radial einwärts ist, wobei die Platte (208) bewirkt, dass die Luft, die durch die TOBI (202) geströmt ist, benachbart zu dem Scheibennabenabschnitt (212) eingeschlossen wird.

7. Gasturbinentriebwerk (10; 100) nach Anspruch 6, wobei die Platte (208) und der Scheibennabenabschnitt (212) jeweils einen radial inneren Abschnitt (213, 214) aufweisen, der sich näher an parallel zu der Mittelachse als ein radial äußerer Abschnitt erstreckt.

8. Gasturbinentriebwerk (10; 100) nach Anspruch 7, wobei eine Minischeibe (216) radial einwärts des radial inneren Abschnittes (213, 214) der Nabe positioniert ist.

9. Gasturbinentriebwerk (10; 100) nach einem vorhergehenden Anspruch, wobei die am weitesten stromabwärtige Schaufelstufe (24; 124) Luftdurchgänge (218) zwischen den Schaufeln (53; 153) und der Rotorscheibe (50) aufweist, sodass Luft aus dem Hohlraum (205) stromaufwärts zu einer Leitschaufelreihe (64) stromaufwärts der am weitesten stromabwärtigen Schaufelstufe (24; 124) strömen kann.

## Revendications

1. Moteur à turbine à gaz (10 ; 100) comprenant :
une section de compresseur (14) ayant un étage de pales le plus en aval (24 ; 124) et une rangée d'aubes en aval (26 ; 126) positionnée en aval dudit étage de pales le plus en aval (24 ; 124), ledit étage de pales le plus en aval (24 ; 124 ) comportant une pluralité de paires de pales (53 ; 153), la majorité des paires de pales (53 ; 153) étant circonférentiellement espacées des autres desdites paires de pales (53 ; 153), chaque dite paire de pales (53 ; 153) étant fonctionnellement connectée à un disque de rotor (50) disposé radialement vers l'intérieur desdites paires de pales (53 ; 153), chaque dite paire de pales (53 ; 153) comportant une pale avant (52 ; 152) et une pale arrière (54 ; 154), lesdites pales arrière (54 ; 154) étant configurées pour conditionner davantage l'écoulement d'air par rapport à ladite pale avant (52 ; 152) ;
**caractérisé en ce que**
un injecteur embarqué tangentiel (TOBI) (202) est positionné radialement vers l'intérieur de ladite rangée d'aubes aval (26 ; 126) ; et
un joint (204, 206) est prévu entre une extrémité aval dudit étage de pales le plus en aval (24 ; 124) et une extrémité amont de ladite rangée d'aubes aval (26 ; 126), ledit joint (206, 204) définissant une cavité (205) s'étendant radialement vers l'intérieur le long d'un moyeu dudit disque (50), dans lequel l'air traversant ledit TOBI (202) est de l'air ayant été comprimé par ledit étage de pales le plus en aval (24 ; 124) de ladite section de compresseur (14), et ledit l'air traverse un échangeur de chaleur (203) avant de traverser ledit TOBI (202).

2. Moteur à turbine à gaz (10 ; 100) selon la revendication 1, dans lequel il n'y a pas d'étage d'aubes de stator intermédiaire entre lesdites pales avant (52 ; 152) et lesdites pales arrière (54 ; 154).

3. Moteur à turbine à gaz (10 ; 100) selon la revendication 1 ou 2, dans lequel au moins 10 % de l'air de refroidissement traversant ledit TOBI (202) est de l'air intermédiaire de compresseur (200).

4. Moteur à turbine à gaz (10 ; 100) selon la revendication 3, dans lequel ledit air intermédiaire de compresseur (200) est refroidi dans l'échangeur de chaleur (203) avant de passer dans ledit TOBI (202).

5. Moteur à turbine à gaz (10 ; 100) selon une quelconque revendication précédente, dans lequel ledit joint (206, 204) est prévu à la fois sur ladite extrémité aval dudit étage de pales le plus en aval (24 ; 124) et sur ladite extrémité amont de ladite rangée d'aubes aval (26 ; 126).

6. Moteur à turbine à gaz (10; 100) selon une quelconque revendication précédente, dans lequel une structure statique radialement vers l'intérieur de ladite rangée d'aubes aval (26 ; 126) comporte une plaque (208) s'étendant selon un angle qui n'est pas perpendiculaire par rapport à un axe central (A) dudit moteur (10 ; 100) et ayant un composant s'étendant radialement vers l'intérieur et ledit moyeu de disque ayant également une partie (212) s'étendant dans une direction qui n'est pas perpendiculaire audit axe central et ayant un composant qui est radialement vers l'intérieur, ladite plaque (208) provoquant le confinement de l'air ayant traversé ledit TOBI (202) adjacent à ladite partie de moyeu de disque (212).

7. Moteur à turbine à gaz (10 ; 100) selon la revendication 6, dans lequel ladite plaque (208) et ladite partie de moyeu de disque (212) ont chacune une partie radialement interne (213, 214) qui s'étend plus près pour être parallèle audit axe central qu'une partie radialement externe.

8. Moteur à turbine à gaz (10 ; 100) selon la revendication 7, dans lequel un mini-disque (216) est positionné radialement vers l'intérieur de ladite partie radialement interne (213, 214) dudit moyeu.

9. Moteur à turbine à gaz (10 ; 100) selon une quelconque revendication précédente, dans lequel ledit étage de pales le plus en aval (24 ; 124) a des passages d'air (218) entre lesdites pales (53 ; 153) et ledit disque de rotor (50) de sorte que l'air de ladite cavité (205) peut passer en amont vers une rangée d'aubes (64) en amont dudit étage de pales le plus en aval (24 ; 124) .
